# EUROPÄISCHE PATENTSCHRIFT

(11) **EP 3 440 290 B1**
(45) Veröffentlichungstag und Bekanntmachung des Hinweises auf die Patenterteilung: **24.11.2021**
(21) Anmeldenummer: 17724729.3
(22) Anmeldetag: 03.04.2017
(51) Int. Cl.: E04H 3/24, F16B 7/04, E04F 15/02, E04F 15/024, E04G 1/15, F16B 12/02

(54) **EVENTBODENKONSTRUKTION**
FLOOR STRUCTURE FOR EVENTS
STRUCTURE AU SOL POUR ÉVÈNEMENT

(30) Priorität: 05.04.2016 DE 102016003869
(43) Veröffentlichungstag der Anmeldung: 13.02.2019
(73) Patentinhaber: Wilhelm Layher Verwaltungs-GmbH, 74363 Güglingen-Eibensbach (DE)
(72) Erfinder: KRELLER, Helmut, 74906 Bad Rappenau (DE)
(74) Vertreter: Clemens, Gerhard
(86) Internationale Anmeldenummer: PCT/DE2017/000086
(87) Internationale Veröffentlichungsnummer: WO 2017/174051

(56) Entgegenhaltungen:
- EP-A1- 2 468 985
- WO-A1-2010/126446
- DE-A1-102010 016 107
- US-B1- 7 360 343

## Beschreibung

### TECHNISCHES GEBIET

Die vorliegende Erfindung betrifft eine Eventbodenkonstruktion gemäß Anspruch 1 mit zwei parallel gegenüberliegenden Holmprofilen, zwei parallel gegenüberliegenden mit den Holmprofilen umfangsmäßig ein Viereck mit offenen Eckbereichen bildenden Stirnprofilen, wobei die Holmprofile und/oder Stirnprofilen an Tragprofilen zur Bildung von beispielsweise einer Bühne oder eines Podiums, lagerbar sind, einem an den Stirnprofilen und Holmprofilen angeschlossenen Bodenbelag, insbesondere Sperrholzbodenbelag, Eckverbinderprofilen, die im jeweiligen Eckbereich ein Holmprofil mit einem Stirnprofil tragend verbinden, jeweils im Eckbereich angeschlossene Eckkappeneinrichtungen, die den offenen Eckbereich zu einer geschlossenen Eckeinheit ausbilden, wobei die Eckkappeneinrichtung mehrere separate Bauteile umfasst.

### STAND DER TECHNIK

Es sind Eventböden bekannt, bei denen die Stirn- und Holmprofile auf Stoß montiert sind und in deren Inneren zu Verstärkungszwecken beispielsweise ein L-förmiger Kern als Eckprofil eingesetzt wird. Eckkappen sind bei derartigen Eventböden nicht bekannt. Somit können auf Podiumsoberflächen keine Durchbrüche (beispielsweise für Stiele) realisiert werden. Ein Vorteil eines derartigen Eventbodens ist die farblich homogene Oberfläche, da in den Eckbereichen kein Farbunterschied gegeben ist. Die bekannten Eventböden können sowohl in Längs- als auch in Querrichtung eingebaut werden.

Weiterhin sind Eventböden mit abnehmbaren Eckkappen bekannt, die auf das Eckprofil aufgeschoben werden können. Somit können durch Abnahme der Eckprofile aneinandergrenzender Eckbereiche mehrerer Eventböden Durchbrüche (beispielsweise für Stiele) auf der Podiumsoberfläche ermöglicht werden. Aufgrund der offenen Aluminiumstrangpressprofile besteht insbesondere in deren Stirnendbereichen bei abgenommener Eckkappe durch die vorhandenen scharfen Kanten eine nicht unerhebliche Verletzungsgefahr. Nachteilig bei derartigen Eventböden ist die farbliche nicht homogene Oberfläche in den Eckbereichen, die aus dem Farbunterschied zwischen dem Bodenbelag des Eventbodens und der Farbe der Eckkappe resultiert. Diese bekannten Eventböden können sowohl in Längs- als auch in Querrichtung eingebaut werden. In der Regel haben diese Eventböden im Eckbereich des Bodens eine Fase, das heißt die Ecke des Bodenbelags ist abgeschnitten. Allerdings werden auch Eventböden ohne Fase angeboten. Zur Herstellung derartiger Eventböden ist jedoch ein zweites Werkzeug zur Herstellung einer entsprechenden Eckkappe notwendig. Dies bedeutet einen erhöhten Produktionsaufwand. Bei den bekannten Eventbodenvarianten mit einem Boden mit Fase und ohne Fase werden zwei unterschiedliche Eckkonstruktionen hergestellt. Dies bedeutet einen erhöhten Produktionsaufwand, da je nach Kundenwunsch zwei Typen-Böden gefertigt werden müssen.

Die EP 2 468 985 A1 offenbart eine Eventbodenkonstruktion gemäß der Präambel von Anspruch 1 und zeigt eine Belagbodenvorrichtung für Bühnen-, Tribünen- und Podiensysteme mit den Merkmalen des Oberbegriffs des Anspruchs 1. In die Schenkel der Eckverbindereinheit werden zur Verstärkung Einsatzteile eingeschoben und angeschlossen, wobei die Schenkel im angeschlossenen Zustand in die Tragrandprofile eingeschoben vorhanden sind. Innenseitig ist im Eckbereich eine Steckbeinaufnahmeeinheit vorhanden, die im Bereich der verstärkten Schenkel der Eckbverbindereinheit an die Tragrandprofile angeschlossen ist.

Die WO 2010/126446 A1 offenbart eine Eventbodenkonstruktion bei der im Eckbereich neben einem Eckverbinderprofil eine dreieckförmige Eckkappeneinheit zur Ausbildung eines geschlossenen Eckbereichs angeschlossen wird.

Die DE 10 2010 016 107 A1 offenbart ein Bühnenpodestelement bei dem im Eckbereich jeweils unterseitig Steckbeinanschlusseinheiten vorhanden sind.

In der US 7 360 343 B1 ist eine Eventbodenkonstruktion beschrieben, bei der an einem im Querschnitt quadratischen Grundkörper Profilschenkel zum Einschieben in einen Hohlraum des jeweiligen Längsrandprofils vorhanden sind, wobei durch den quadratischen Grundkörper der offene Eckbereich zu einem geschlossenen Eckbereich wird.

### DARSTELLUNG DER ERFINDUNG

Ausgehend von dem genannten Stand der Technik liegt der vorliegenden Erfindung das technische Problem beziehungsweise die Aufgabe zugrunde, eine Eventbodenkonstruktion anzugeben, die mit einer Eckkonstruktion für zwei Bodenvarianten, nämlich eine Eckkonstruktion mit einem Bodenbelag ohne Fase und eine Ecckonstruktion mit einem Bodenbelag mit Fase, ermöglicht, eine wirtschaftliche Herstellung gewährleistet, sowohl in Längs- als auch in Querrichtung eingebaut werden kann, hohe Traglasten bei geringer Durchbiegung ermöglicht und eine Kompatibilität zu älteren Eventböden besteht und die Herstellung eines Durchbruchs im Eckbereich in einfacher Art und Weise ermöglicht.

Die erfindungsgemäße Eventbodenkonstruktion der eingangs genannten Art ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Eventbodenkonstruktion zeichnet sich demgemäß dadurch aus, dass eine Grundplatte vorhanden ist, die, insbesondere fest, an das Eckverbinderprofil oder das Holm-/Stirnprofil anschließbar ist und die außenseitige Kontur des Eckverbinderprofils und die freien Stirnendbereiche des Holm- und Stirnprofils abdeckt, eine Eckkappeneinheit vorhanden ist, die lösbar mit der Grundplatte verbunden ist und eine von oben her in die Eckkappeneinheit einsetzbare Aufsatzeinheit vorhanden ist, damit sich der offene Endbereich nach oben bündig mit dem Bodenbelag abschließen lässt, die Eckkappeneinheit eine im Wesentlichen dreieckförmige Umfangskontur aufweist, deren Hypotenuse dem Eckverbinderprofil zugewandt und lösbar mit demselben verbunden ist und deren Katheten Wände bilden, die in einem Winkel von 90° aufeinander zulaufend angeordnet sind, die Hypotenuse der Eckkappeneinheit im Wesentlichen in Längsrichtung einer im Eckbereich des Bodenbelags angeformten Fase verläuft.

Eine konstruktiv einfache Umsetzung der lösbaren Verbindung zwischen der Grundplatte und der Eckkappeneinheit ist als Schwalbenschwanzverbindung ausgebildet, was eine besonders einfache Herstellung und Montage gewährleistet.

Eine erfindungsgemäße Weiterbildung mit hoher Variabilität zeichnet sich dadurch aus, dass die Eckkappeneinrichtung ein weiteres separates Bauteil aufweist, das als Aufsatzeinheit oberseitig lösbar an der Eckkappeneinheit angeschlossen ist und eine im Wesentlichen ebene Oberseite aufweist. Dabei ist es besonders vorteilhaft - gemäß einer bevorzugten Weiterbildung - die Eventbodenkonstruktion derart auszugestalten, dass die Aufsatzeinheit eine dreieckförmige Umfangskontur aufweist, die in die nach oben offene dreieckförmige Innenkontur der Eckkappeneinheit lösbar eingesetzt ist.

Die erfindungsgemäße Ausgestaltung, die bezüglich der Fixierung der Grundplatte möglichst wenige zusätzliche Bauteile benötigt, zeichnet sich dadurch aus, dass auch bei Ausbildung einer Fase im Eckbereich des Bodenbelags dieser die Oberseite der angeschlossenen Grundplatte zumindest bereichsweise überdeckt.

Um eine besonders einfache, schnelle und zuverlässige Montage beziehungsweise Demontage im Eckbereich zu gewährleisten, zeichnet sich eine besonders bevorzugte Ausgestaltung dadurch aus, dass die Verbindung zwischen Eckverbinderprofil und Grundplatte als Schwalbenschwanzprofilverbindung ausgebildet ist.

Eine besonders kompakte, optisch ansprechende und einer Schmutzansammlung entgegen wirkende bevorzugte Ausgestaltung zeichnet sich dadurch aus, dass im Eckbereich die nach außen sichtbare Außenwand des Holm-/ Stirnprofils, die Außenwand der Grundplatte und die Außenwand der Eckkappeneinheit in einer Ebene angeordnet sind, so dass insgesamt ein geschlossener Eckbereich ausgebildet ist.

Eine besonders wirtschaftliche Herstellung bezüglich des Produktionsaufwand als Massenbauteil bei gleichzeitiger Gewährleistung einer dauerhaft zuverlässigen Funktionalität zeichnet sich dadurch aus, dass die Grundplatte und/oder die Eckkappeneinheit und/oder die Aufsatzeinheit als Kunststoffspritzteil ausgebildet sind, insbesondere aus Polyamid (PA).

Eine besonders vorteilhafte Ausgestaltung, die ermöglicht, dass der Eventboden in Längs- und Querrichtung problemlos auf der Arbeitertragkonstruktion montiert werden kann, zeichnet sich dadurch aus, dass der Außenkonturquerschnitt des Holmprofils und des Stirnprofils identisch ausgebildet ist und unterschiedliche Wandstärken aufweist. Durch die Veränderung der Wandstärken kann die Gesamtsteifigkeit des Eventbodens deutlich erhöht werden. Gleichzeitig ist es möglich, die Bauhöhe unter Einhaltung oder gar unter Erhöhung der Tragfähigkeit zu reduzieren.

Durch die mehrteilig ausgebildete Eckkappeneinrichtung bestehend aus Grundplatte, Eckkappeneinheit und Aufsatzeinheit, können erfindungsgemäß mit nur einer Eckkonstruktion in Kombination mit dem Stirnprofil, dem Holmprofil und dem Eckverbinderprofil zwei Eventbodenvarianten hergestellt werden, nämlich ein Eventboden mit einem Bodenbelag (beispielsweise Sperrholz) ohne Fase oder ein Eventboden, bei dem der Bodenbelag eine Fase aufweist. Bei abgenommener Eckkappeneinheit besteht keine Verletzungsgefahr, da die Endbereiche der Aluminiumprofile (Stirnprofil, Holmprofil) von der Grundplatte verdeckt werden.

Bei dem Eventboden mit Fase im Bodenbelag können bei Bedarf Durchbrüche, beispielsweise für Stiele in den Eckbereichen der Eventböden realisiert werden. Hierzu muss die durch eine Schwalbenschwanznut geführte Eckkappeneinheit lediglich nach oben hin von der Grundplatte entfernt werden. Üblicherweise wird die Eckkappeneinheit durch einen Clip in Position gehalten. Für den Fall, dass keine Durchbrüche erforderlich sind, ist oberseitig in die Eckkappeneinheit die Aufsatzeinheit eingesetzt. Da normalerweise sich die Farbe der Aufsatzeinheit von der Farbe des Bodenbelags (Sperrholz) unterscheidet, entsteht ein farblich nicht homogene Oberfläche in den Eckbereichen des Eventbodens insgesamt.

Bei einem Eventboden ohne Fase im Bodenbelag wird dieselbe Eckkappeneinheit verwendet wie die im oberen Absatz beschriebenen Varianten, nur das hier die obenliegende Aufsatzeinheit der Ecckappeneinheit nicht vorhanden ist, wodurch eine farblich homogene Oberfläche entsteht, da der Bodenbelag bis in die Eckspitze verläuft und kein Farbunterschied in den Eckbereichen gegeben ist. Ein weiterer Vorteil dieser Variante ist, dass Durchbrüche (beispielsweise für Stiele) in den Eckbereichen der Eventböden im "Notfall" durch selbstständiges Anbringen von Fasen im Sperrholz realisiert werden können. Danach kann die bei der oben beschriebenen Variante die herausnehmbare Eckkappe von der Grundplatte entfernt werden, um gegebenenfalls Durchbrüche zu realisieren.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die Beschreibung und die Zeichnung zeigen:
- Fig. 1: schematische Perspektivdarstellung einer Eventbodenkonstruktion mit teilweise entferntem Bodenbelag,
- Fig. 2: schematische Teilperspektivdarstellung einer Eventbodenkonstruktion im Eckbereich mit lösbar angeschlossener Eckkappeneinrichtung ohne Ausbildung einer Fase des Bodenbelags im Eckbereich,
- Fig. 3: schematische Teilperspektivdarstellung einer Eventbodenkonstruktion im Eckbereich mit lösbar angeschlossener Eckkappeneinrichtung mit Ausbildung einer Fase des Bodenbelags im Eckbereich,
- Fig. 4: schematische Draufsicht auf eine Eckkappeneinrichtung mit einer Grundplatte, einer Eckkappeneinheit und einer Aufsatzeinheit in auseinander gezogener Darstellung,
- Fig. 5: schematische Draufsicht auf eine Eckkappeneinrichtung mit einer Grundplatte, einer Eckkappeneinheit und einer Aufsatzeinheit in zusammen gesetzter Darstellung,
- Fig. 6: schematische Perspektivdarstellung eines Ausführungsbeispiels einer Grundplatte,
- Fig. 7: schematischer Längsquerschnitt durch die Grundplatte gemäß Fig. 6,
- Fig. 8: schematische Seitenansicht der Grundplatte gemäß Fig. 6,
- Fig. 9: schematischer Schnitt entlang der Schnittführung A-A in Fig. 7,
- Fig. 10: schematischer Schnitt entlang der Schnittführung B-B in Fig. 7,
- Fig. 11: schematischer Schnitt entlang der Schnittführung C-C in Fig. 7,
- Fig. 12: schematischer Schnitt entlang der Schnittführung D-D in Fig. 7,
- Fig. 13: schematischer Schnitt entlang der Schnittführung E-E in Fig. 7,
- Fig. 14: schematischer Schnitt entlang der Schnittführung F-F in Fig. 7,
- Fig. 15: schematische Unteransicht der Eckkappeneinheit gemäß Fig. 4,
- Fig. 16: schematische Draufsicht auf die Eckkappeneinheit gemäß Fig. 15,
- Fig. 17: schematische Seitenansicht der Eckkappeneinheit gemäß Fig. 15,
- Fig. 18: schematischer Schnitt gemäß Schnittführung A-A in Fig. 15,
- Fig. 19: schematischer Schnitt gemäß Schnittführung B-B in Fig. 15,
- Fig. 20: schematischer Schnitt gemäß Schnittführung C-C in Fig. 15,
- Fig. 21: schematischer Schnitt gemäß Schnittführung E-E in Fig. 15,
- Fig. 22 a) bis e): schematische Perspektivdarstellung der Eckkappeneinheit gemäß Fig. 15 in unterschiedlicher Blickrichtung,
- Fig. 23: schematische Perspektivdraufsicht auf die Aufsatzeinheit gemäß Fig. 4,
- Fig. 24: schematische Perspektivuntersicht auf die Aufsatzeinheit gemäß Fig. 23,
- Fig. 25: schematischer Querschnitt durch ein Ausführungsbeispiels eines Holmprofils,
- Fig. 26: schematischer Querschnitt eines Ausführungsbeispiels eines Stirnprofils,
- Fig. 27: schematischer Querschnitt eines Ausführungsbeispiels eines Eckverbinderprofil,
- Fig. 28 a) bis d): schematische Draufsicht auf den Anschluss eines Eckverbinderprofils und einer Eckkappeneinrichtung in auseinander gezogener Darstellung und
- Fig. 29: schematische Detaildraufsicht im Eckbereich einer Eventbodenkonstruktion bei abgenommener Eckkappeneinheit zur Schaffung eines Durchbruchbereiches für einen Stiel bei flächenmäßig verlegten Eventbodenkonstruktionen.

### WEGE ZUM AUSFÜHREN DER ERFINDUNG

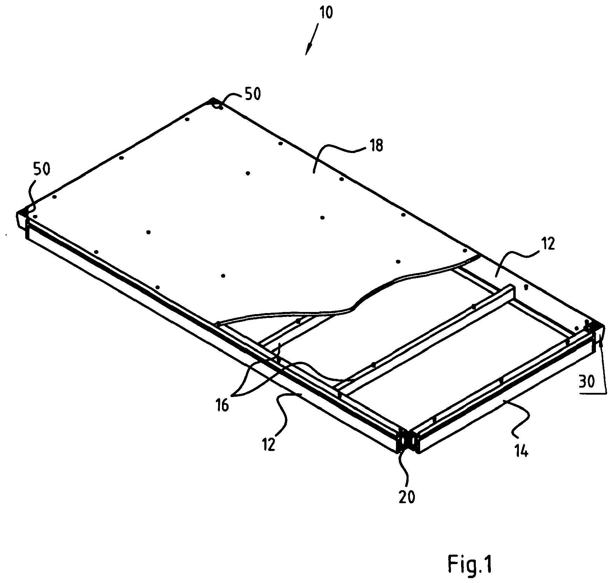

Fig. 1 zeigt ein Ausführungsbeispiel einer Eventbodenkonstruktion 10, die parallel beabstandet gegenüberliegende Holmprofile 12 und parallel beabstandet gegenüberliegende Stirnprofile 14 aufweist, die eine Rechteckumfangsprofilkontur bilden, wobei die Stirnendbereiche der Profile 12, 14 rechtwinklig zur Längsrichtung geschnitten sind, so dass sich im Eckbereich offene Eckbereiche bilden. Auf den Holm- und Stirnprofilen 12, 14 ist ein Bodenbelag 18 oberseitig angeschlossen, der häufig als Sperrholzbodenbelag ausgebildet ist. Unterseitig sind zusätzlich zwischen den Holmprofilen 12 parallel beabstandete Sprossen 16 zur Unterstützung des Bodenbelags 18 vorhanden.

Im in Fig. 1 vorderen Eckbereich ist ein Eckverbinderprofil 20 angeschlossen, das das Holmprofil 12 und das Stirnprofil 14 tragend verbindet. Im in Fig. 1 hinteren rechten Eckbereich ist zusätzlich noch eine schematisch dargestellte Eckkappeneinrichtung 30 lösbar angeschlossen, die ein geschlossenes rechtwinkliges Eckbild erzeugt.

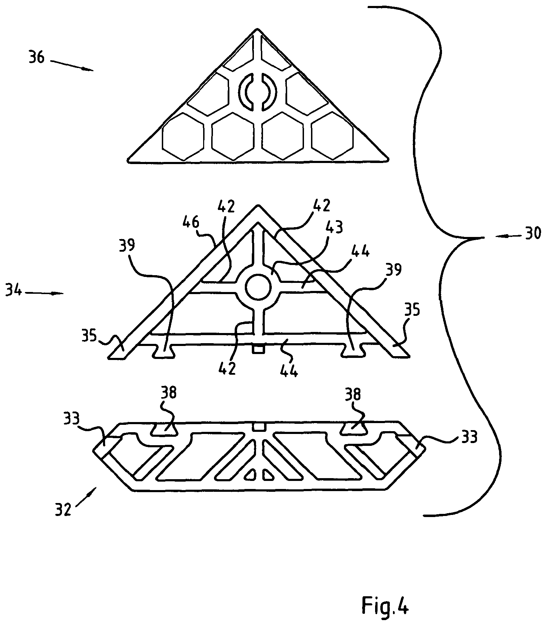

Die Eckkappeneinrichtung 30 wird im Folgenden beschrieben:
Gemäß Fig. 4 besitzt die Eckkappeneinrichtung 30 insgesamt drei separate Bauteile, nämlich eine Grundplatte 32, eine Eckkappeneinheit 34 und eine Aufsatzeinheit 36, die in Fig. 4 im auseinander gezogenen Zustand dargestellt sind. Die Grundplatte 32 wird wie weiter unten beschrieben an das Eckverbinderprofil 20 fest angeschlossen. Auf der dem freien Eckbereich zugewandten Außenseite weist die Grundplatte 32 zwei beabstandete Schwalbenschwanznute 38 auf.

Die Eckkappeneinheit 34 weist eine Umfangskontur in Form eines rechtwinkligen Dreiecks auf, wobei an der Hypotenuse 44 zwei beabstandete Schwalbenschwanzvorsprünge 39 vorhanden sind, die lösbar in die Schwalbenschwanznute 38 der Grundplatte 32 eingeführt werden. Die beiden Katheten 46 bilden eine rechtwinklige Spitze und sind zur Grundplatte 32 hin jeweils mit einem horizontalen nach oben überstehenden Vorsprung 35 versehen. Im lösbaren an die Grundplatte 32 angeschlossenen Zustand der Eckkappeneinheit 34 liegen die horizontalen Vorsprünge 35 bündig an den vertikalen Vorsprüngen 33 im linken und rechten Randbereich der Grundplatte 32 an. Sowohl die horizontalen Vorsprünge 35 als auch die vertikalen Vorsprünge 33 verlaufen nicht über die gesamte Höhe der Grundplatte 32 beziehungsweise der Eckkappeneinheit 34, sondern lediglich im oberen Randbereich.

Als drittes Bauteil ist in Fig. 4 die dreieckförmige Aufsatzeinheit 36 dargestellt, deren Außenumfangskontur ein rechtwinkliges Dreieck bildet, derart, dass diese Dreiecksstruktur der Aufsatzeinheit 36 von oben her in die Eckkappeneinheit 34 eingesetzt werden kann.

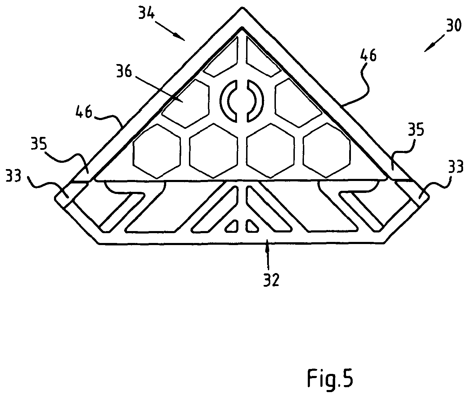

Der eingesetzte Zustand der Aufsatzeinheit 36 in der Eckkappeneinheit 34 ist in Fig. 5 dargestellt. Gleichzeitig ist in Fig. 5 die Eckkappeneinheit 34 an die Grundplatte 32 angeschlossen, was aufgrund der Geometrie der eingesteckten Aufsatzeinheit 36 in Fig. 5 nicht sichtbar ist.

Diese Eckkappeneinrichtung 30 als Gesamtbauteil ist an das Eckverbinderprofil 20 fest angeschlossen, was weiter unten beschrieben werden wird. Die Eckkappeneinheit 34 und die Aufsatzeinheit 36 können jedoch gelöst werden.

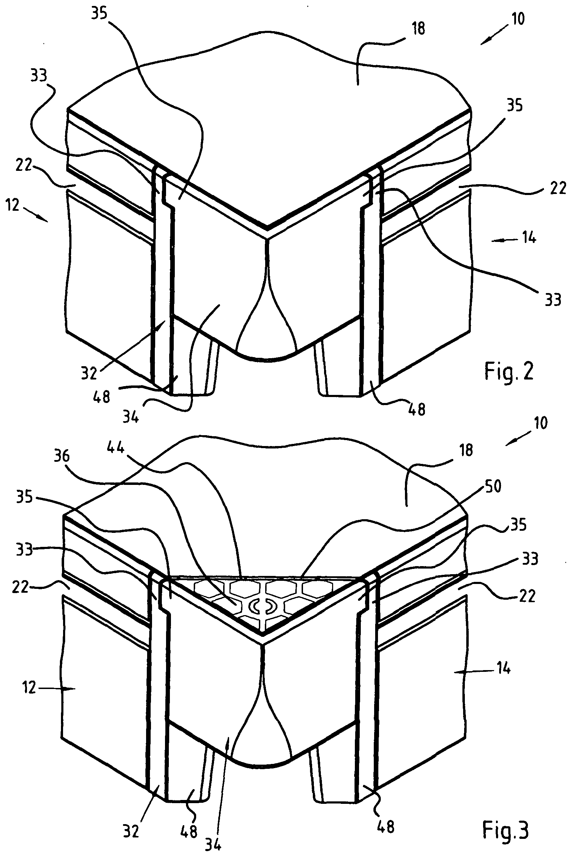

Fig. 2 zeigt in einer Detailperspektive den Einsatz der Eckkappeneinrichtung 30 bei einer Eventbodenkonstruktion 10, die einen Bodenbelag 18 aufweist, der im Eckbereich keine Fase aufweist.

Fig. 3 zeigt in einer Detailperspektive eine Eventbodenkonstruktion mit einer Fase 50 des Bodenbelags 18 im Eckbereich.

In Fig. 2 ist die Aufsatzeinheit 36 auf die Eckkappeneinheit 34 nicht aufgesteckt. In Fig. 3 ist die Aufsatzeinheit 36 auf die Eckkappeneinheit 34 aufgesteckt und oberseitig sichtbar vorhanden. Die Hypotenuse 44 der Eckkappeneinheit 34 beziehunsgweise Aufsatzeinheit 36 verläuft im Wesentlichen in Längsrichtung der Fase 50.

An die Grundplatte 32 sind zu beiden Seiten nach unten verlaufende Schenkel 48 angeformt, so dass im angeschlossenen Zustand der Grundplatte 32 an das Eckverbinderprofil 20 sowohl das Eckverbinderprofil 20 als auch die Stirnseite des Holmprofils 12 und die Stirnseite des Stirnprofils 14 vollständig von der Grundplatte 32 abgedeckt ist. Dabei schließt die jeweilige seitliche Stirnseite der Grundplatte 32 direkt an die Stirnseite des Holmprofils 12 beziehungsweise des Stirnprofils 14 an. Im Bereich des vertikalen Vorsprungs 33 der Grundplatte 32 schließt bündig die horizontale Vorsprungeinheit 35 der Eckkappeneinheit 34 an, wobei die Eckkappeneinheit 34 bündig zu der Außenseite der Grundplatte 32 und des Holmprofils 12 und des Stirnprofils 14 eine spitz nach vorne im rechten Winkel zulaufenden geschlossenen Eckbereich bildet.

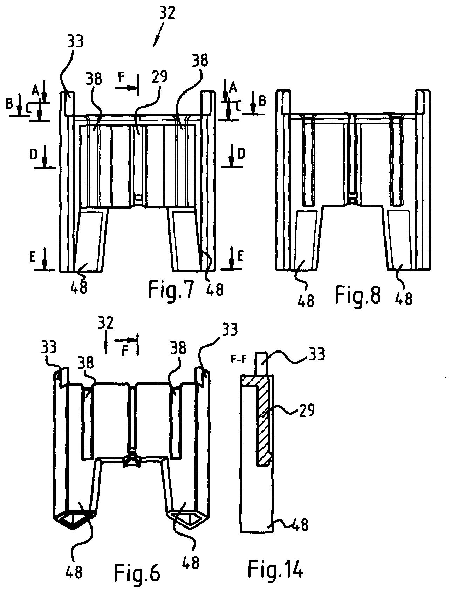

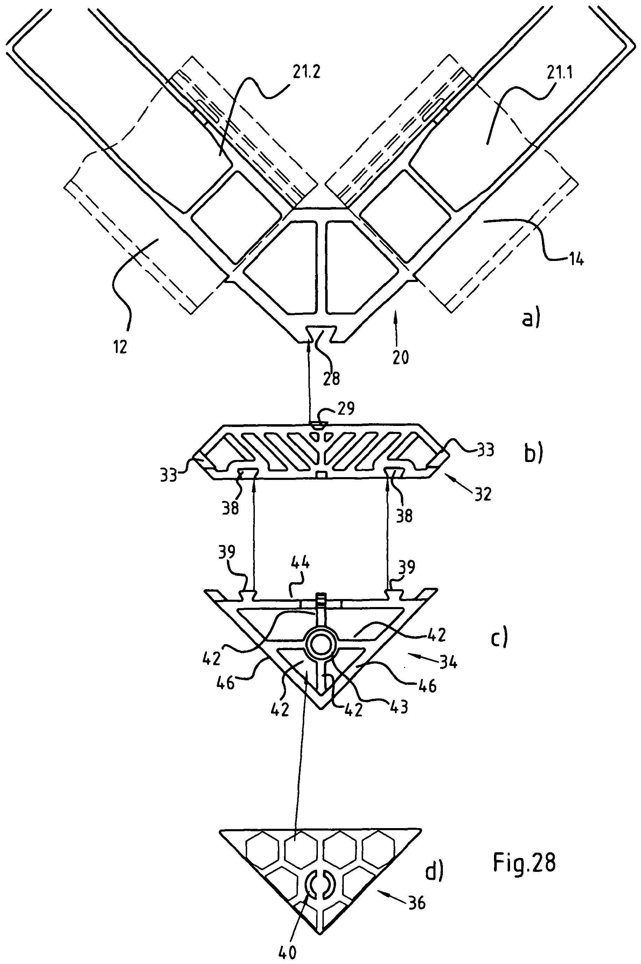

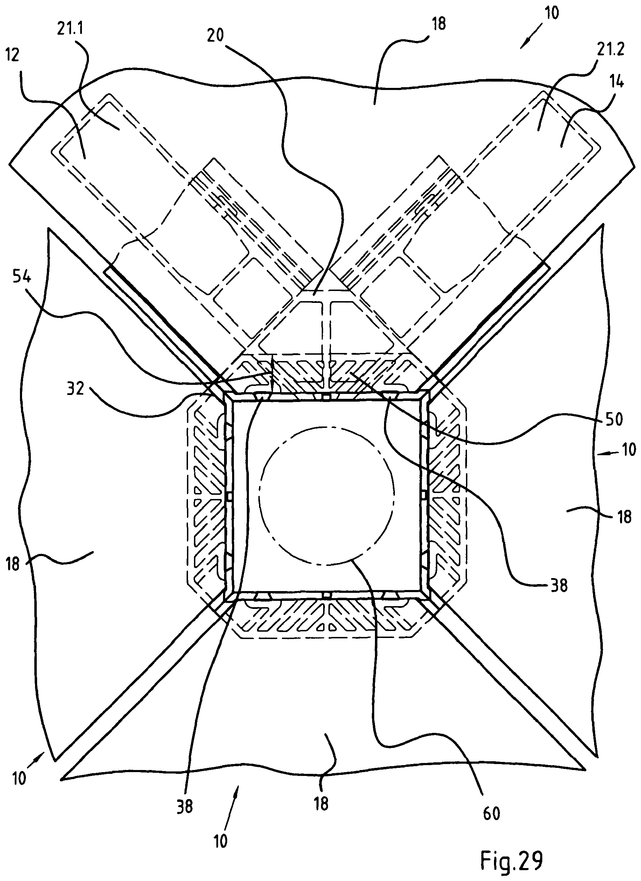

Die Figuren 6 bis 14 zeigen ein konstruktives Ausführungsbeispiel einer Grundplatte 32 mit nach unten angeformten beidseitigen Schenkeln 48. Gleiche Bauteile der Grundplatte 32 und Fig. 4 tragen dieselben Bezugszeichen und werden nicht nochmals erläutert. In Schnittfiguren 9 bis 12 ist deutlich zu erkennen, dass auf der dem freien Eckbereich zugewandten Außenseite der Grundplatte 32 die Schwalbenschwanznute 38 eingeformt sind, die zum lösbaren Anschluss der Eckkappeneinheit 34 dienen. Auf der dem Eckverbinderprofil 20 zugewandten Seite der Grundplatte 32 weist diese mittig einen Schwalbenschwanzvorsprung 29 auf, der in eine entsprechende Schwalbenschwanznut 38 des Eckverbinderprofil 20 eingefädelt wird (siehe beispielsweise Fig. 28, 29).

Die Grundplatte 32 wird fest an dem Eckverbinderprofil 20 angeschlossen und deckt nach außen hin vollständig das Eckverbinderprofil 20 selbst und die offenen Stirnseiten des anschließenden Holm- und Stirnprofils 12, 14 ab, so dass bei abgenommener beziehungsweise noch nicht angeschlossener Eckklappeneinheit 34 keinerlei Verletzungsgefahr an den mitunter scharfen Kanten der Stirnseiten der als Aluminiumstrangpressprofile ausgebildeten Holm- / Stirnprofilen 12, 14 besteht.

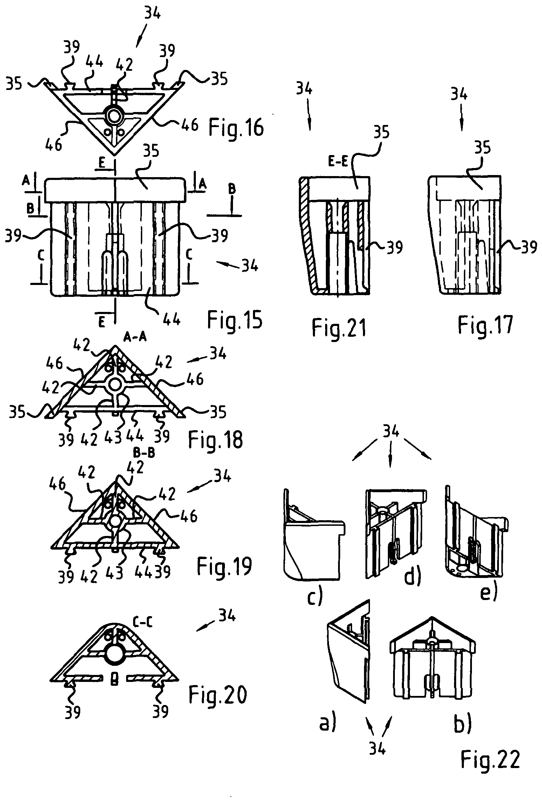

Die Figuren 15 bis 22 zeigen die konkrete konstruktive Ausgestaltung der Eckklappeneinheit 34 von Fig. 4. Gleiche Bauteile tragen dasselbe Bezugszeichen und werden nicht nochmals erläutert. Die Eckklappeneinheit 34 weist eine dreieckförmige Umfangskontur auf, wobei im oberen Bereich der horizontale Vorsprung 35 im Bereich der Katheten 46 vorhanden ist und über die Hypotenuse 44 hinausragt. Innerhalb des Dreieckquerschnitts sind auch orthogonale Stege 42 angeformt, die auf einen zentralen Ringsteg 43 hinzu verlaufen.

Die Eckkappeneinheit 34 wird über die an der Hypotenuse 44 nach außen überragten Schwalbenschwanzvorsprünge 39 an die Schwalbenschwanznute 28 der Grundplatte 32 lösbar angeschlossen, so dass diese im Bedarfsfall von der Grundplatte 32 gelöst werden kann und somit ein Raum geschaffen werden kann, um ein beispielsweise einen Stiel durch einen von der Eventbodenkonstruktion gebildeten Höhenboden hindurch zu führen (siehe Fig. 29).

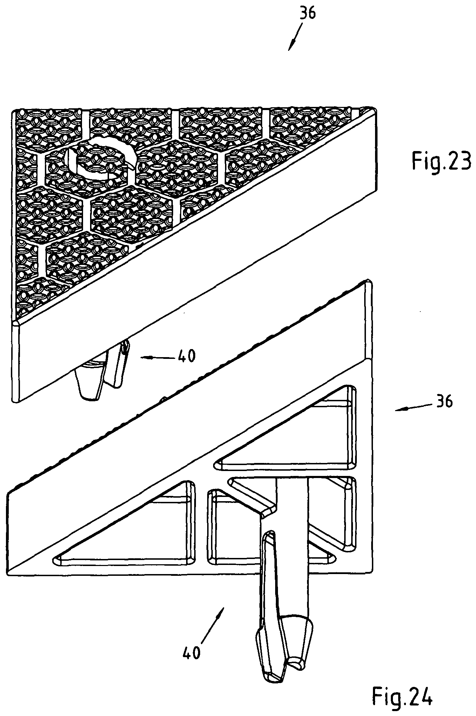

Die Figuren 23 und 24 zeigen in einer Perspektivdarstellung von oben und von unten das konstruktive Ausführungsbeispiel einer Aufsatzeinheit 35 gemäß Fig. 4. Die Aufsatzeinheit weist eine dreieckförmige Umfangskontur auf, die so groß gewählt ist, dass die Aufsatzeinheit 36 von oben her in die Eckkappeneinheit 34 eingesetzt werden kann. Im Inneren der dreieckförmigen Umfangskontur besitzt die Aufsatzeinheit 36 eine Stegstruktur, an der eine nach unten weisende Klemmeinheit 40 angeformt ist, die im aufgesteckten Zustand in dem Ringsteg 43 der Eckkappeneinheit 34 lösbar eingreift. Oberseitig besitzt die Aufsatzeinheit 36 eine ebene Abschlussfläche.

Die Aufsatzeinheit 36 wird eingesetzt, wenn ein Bodenbelag 18 mit Fase 50 im Eckbereich verwendet wird. Damit lässt sich der offene Eckbereich dann problemlos nach oben bündig mit dem Bodenbelag 18 abschließen (siehe beispielsweise Fig. 3).

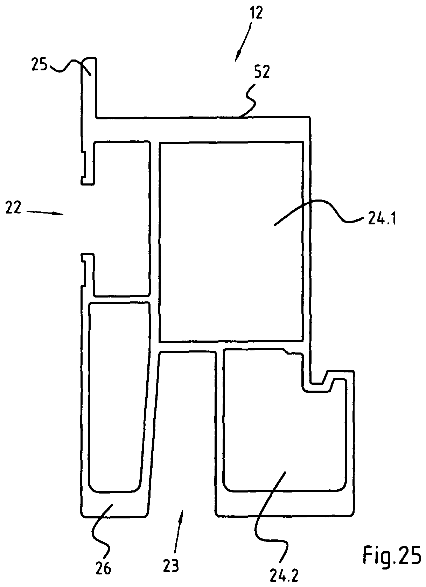

Fig. 25 zeigt ein Ausführungsbeispiel eines als Strangpressprofil ausgebildeten Holmprofils 12, der ausgehend von einer Oberseite 52 davon unterhalb eine Innenkante 24.1 und nach außen anschließend eine hinterschnittene Außennut 22 aufweist. Unterhalb der Außennut 22 ist ein Hohlkammereinhängesteg 26 ausgebildet, der in ein nicht näher dargestelltes unterhalb des Holmprofils 12 angeordnetes Tragprofil eingehängt werden kann. Nach innen schließt an den Einhängesteg 26 eine Ausnehmung 23 an und an die Ausnehmung 23 schließt schließlich eine zweite Innenkammer 24.2 an.

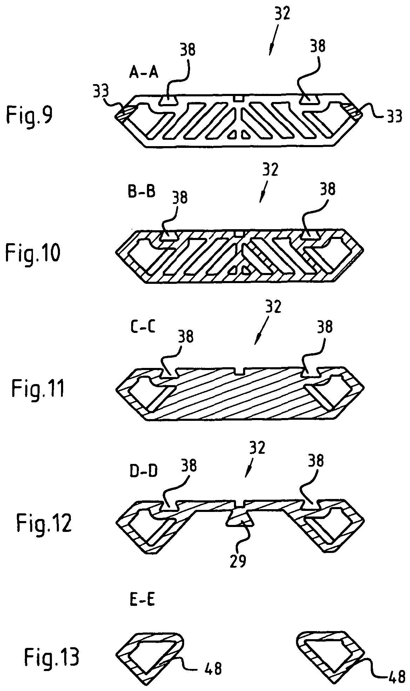

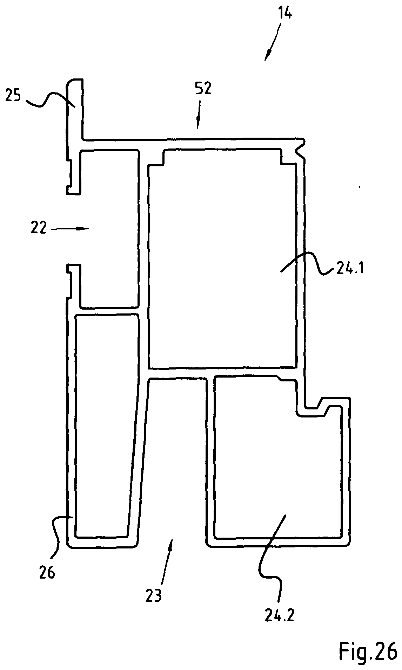

Das in Fig. 26 im Querschnitt dargestellte Stirnprofil 14 weist von der Außenumfangsgeometrie her dieselbe Größe auf wie das Holmprofil gemäß Fig. 12 und auch dieselbe Tragstruktur. Der einzige Unterschied zu dem Holmprofil 12 besteht bei dem Stirnprofil 14 darin, dass stellenweise unterschiedliche Wandstärken gewählt sind, das heißt im Ausführungsbeispiel geringere Wandstärken, da das Stirnprofil 14 im Ausführungsbeispiel gemäß Fig. 1 eine geringere Spannweite aufweist.

Oberhalb der Außennut 22 ist bei beiden Profilen 12, 14 außenseitig ein Außenrandvorsprung 25 angeformt, der als Anschlag für den in Fig. 25 beziehungsweise 26 nicht näher dargestellten Bodenbelag dient.

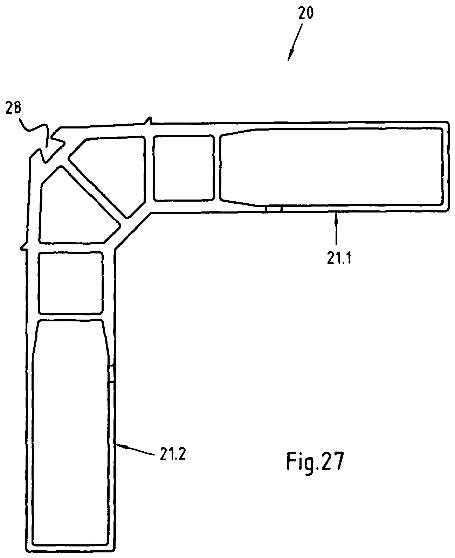

In Fig. 27 ist ein Ausführungsbeispiel eines Eckverbinderprofils 20 dargestellt, das ebenfalls als Aluminiumstrangpressprofil ausgebildet ist. Das Eckverbinderprofil 20 ist als L-Profil mit einem ersten Schenkel 21.1 und einem zweiten Schenkel 21.2 ausgebildet, die als Hohlprofile mit mehreren Kammern und gleicher Lage ausgebildet sind. Diese Schenkel 21.1, 21.2 werden in die erste Innenkammer 24.1 des Holmprofils 12 beziehungsweise des Stirnprofils 14 eingeführt und mit diesem verbunden, so dass eine tragfähige Verbindung beider Profile 12, 14 besteht. Im vorderen äußeren Eckpunkt des Eckverbinderprofils 20 ist eine Schwalbenschwanznut 28 eingeformt, die zum Anschluss der Grundplatte 32 dient. Die Grundplatte 32 wird nämlich über ihren Schwalbenschwanzvorsprung 29 in die Schwalbenschwanznut 28 des Eckverbinderprofils 20 eingeführt und im übrigen wird die Grundplatte 32 fest an das Eckverbinderprofil 20 angeschlossen.

Die Figuren 28a bis d zeigen im auseinander gezogenem Zustand den Anschluss der Grundplatte 32 an das Eckverbinderprofil 20, den lösbaren Anschluss der Eckkappeneinheit 34 an die Grundplatte 32 und den lösbaren Anschluss der Aufsatzeinheit 36 an die Eckkappeneinheit 34.

Bei der Ausgestaltung der Eckkappeneinrichtung 30 gemäß Fig. 28, mit eingesetzter Aufsatzeinheit 36 wird ein Bodenbelag 18 mit einer Fase 50 im Eckbereich eingesetzt, wobei die Fase 50 entlang der Hypotenuse 44 der Aufsatzeinheit 36 beziehungsweise Eckkappeneinheit 34 verläuft.

In Fig. 29 ist schließlich dargestellt, wie mit der erfindungsgemäßen Eckkappeneinrichtung in einem Bühnenboden, der aus vielen hinter- und nebeneinander angeordneten Eventbodenkonstruktionen 10 besteht, in einfacher Art und Weise eine Ausnehmung zum Durchführen eines Stieles 60 geschaffen werden kann. Dies erfolgt in einfacher Art und Weise dadurch, indem die Eckkappeneinheit 34 von der Grundplatte 32 gelöst wird, indem die Schwalbenschwanzvorsprünge 39 der Eckkappeneinheit 34 nach oben aus den Schwalbenschwanznuten 38 der Grundplatte 32 abgezogen werden. Bei der konstruktiven Ausgestaltung gemäß Fig. 29 weist der Bodenbelag 18 im Eckbereich ein Fase 50 auf. In Fig. 29 ist weiterhin zu erkennen, dass der Bodenbelag 18 mit Fase 50 bereichsweise über die Oberseite der Grundplatte 32 übersteht (Überstand 54) und dadurch diesen in seiner Lage sichert.

Mit der erfindungsgemäßen Eventbodenkonstruktion 10 ist es durch die mehrteilig ausgebildete Eckkappeneinrichtung 30 möglich eine Eckkonstruktion mit zwei alternativen Eventbodenvarianten in einfacher Art und Weise herzustellen. So können Bodenbeläge mit und ohne Fase verwendet und in einfacher Art und Weise auch gewünschte Durchbrüche geschaffen werden.

## Patentansprüche

1. Eventbodenkonstruktion (10) mit
- zwei parallel gegenüberliegenden Holmprofilen (12),
- zwei parallel gegenüberliegenden mit den Holmprofilen (12) umfangsmäßig ein Viereck mit offenen Eckbereichen bildenden Stirnprofilen, wobei die Holmprofile (12) und/ oder Stirnprofilen (14) an Tragprofilen zur Bildung von beispielsweise einer Bühne oder eines Podiums, lagerbar sind,
- einem an den Stirnprofilen (14) und Holmprofilen (12) angeschlossenen Bodenbelag (18), insbesondere Sperrholzbodenbelag,
- Eckverbinderprofilen (20), die im jeweiligen Eckbereich ein Holmprofil (12) mit einem Stirnprofil (14) tragend verbinden,
- jeweils im Eckbereich angeschlossene Eckkappeneinrichtungen (30), die den offenen Eckbereich zu einer geschlossenen Eckeinheit ausbilden, wobei
- die Eckkappeneinrichtung (30) mehrere separate Bauteile umfasst:
- eine Grundplatte (32), die an das Eckverbinderprofil (20) oder das Holm-/Stirnprofil (12, 14) anschließbar ist und die außenseitige Kontur des Eckverbinderprofils (20) und die freien Stirnendbereiche des Holm- und Stirnprofils (12, 14) abdeckt,
- eine Eckkappeneinheit (34) die lösbar mit der Grundplatte (32) verbunden ist und eine von oben her in die Eckkappeneinheit (34) einsetzbare, separate Aufsatzeinheit (36) vorhanden ist, damit sich der offene Endbereich nach oben bündig mit dem Bodenbelag (18) abschließen lässt,
- die Eckkappeneinheit (34) eine im Wesentlichen dreieckförmige Umfangskontur aufweist, deren Hypotenuse (44) dem Eckverbinderprofil (20) zugewandt und lösbar mit demselben verbunden ist und deren Katheten (46) Wände bilden, die in einem Winkel von 90° aufeinander zulaufend angeordnet sind,
- die Hypotenuse (44) der Eckkappeneinheit (34) im Wesentlichen in Längsrichtung einer im Eckbereich des Bodenbelags (18) angeformten Fase (50) verläuft.

2. Eventbodenkonstruktion nach Anspruch 1,
- **dadurch gekennzeichnet, dass**
- die lösbare Verbindung zwischen der Grundplatte (32) und der Eckkappeneinheit (34) als Schwalbenschwanzverbindung ausgebildet ist.

3. Eventbodenkonstruktion nach einem oder mehreren der vorstehenden Ansprüche,
- **dadurch gekennzeichnet, dass**
- die Aufsatzeinheit (36) oberseitig lösbar an der Eckkappeneinheit (34) angeschlossen ist und eine im Wesentlichen ebene Oberseite aufweist.

4. Eventbodenkonstruktion nach einem oder mehreren der Ansprüche 1 bis 3,
- **dadurch gekennzeichnet, dass**
- die Aufsatzeinheit (36) eine dreieckförmige Umfangskontur aufweist, die in die nach oben offene dreieckförmige Innenkontur der Eckkappeneinheit (34) lösbar eingesetzt ist.

5. Eventbodenkonstruktion nach einem oder mehreren der vorstehenden Ansprüche,
- **dadurch gekennzeichnet, dass**
- eine Fase (50) im Eckbereich des Bodenbelags (18) ausgebildet ist und der Bodenbelag (18) die Oberseite der angeschlossenen Grundplatte (32) zumindest bereichsweise überdeckt.

6. Eventbodenkonstruktion nach einem oder mehreren der vorstehenden Ansprüche,
- **dadurch gekennzeichnet, dass**
- die Verbindung zwischen Eckverbinderprofil (20) und Grundplatte (32) als Schwalbenschwanzprofilverbindung ausgebildet ist.

7. Eventbodenkonstruktion nach einem oder mehreren der vorstehenden Ansprüche,
- **dadurch gekennzeichnet, dass**
- die nach außen sichtbare Außenwand des Holm-/ Stirnprofils (12, 14), der Grundplatte (32) und der Eckkappeneinheit (34) in einer Ebene angeordnet sind, so dass insgesamt ein geschlossener Eckbereich ausgebildet ist.

8. Eventbodenkonstruktion nach einem oder mehreren der vorstehenden Ansprüche,
- **dadurch gekennzeichnet, dass**
- die Grundplatte (32) und/ oder die Eckkappeneinheit (34) und/oder die Aufsatzeinheit (36) als Kunststoffspritzteil ausgebildet sind, insbesondere aus Polyamid (PA).

9. Eventbodenkonstruktion nach einem oder mehreren der vorstehenden Ansprüche,
- **dadurch gekennzeichnet, dass**
- der Außenkonturquerschnitt des Holmprofils (12) und des Stirnprofils (14) identisch ausgebildet ist und unterschiedliche Wandstärken aufweist.

## Claims

1. A floor structure (10) for events having
- two side profiles (12) which are situated opposite and parallel to one another,
- two end profiles which are situated opposite and parallel to one another and, with the side profiles (12), form the periphery of a rectangle with open corner regions, wherein the side profiles (12) and/or end profiles (14) are supportable on carrier profiles for forming, for example, a platform or a podium,
- a floor covering (18), in particular a laminated wood floor covering, which is connected to the end profiles (14) and the side profiles (12),
- corner connector profiles (20) which connect a side profile (12) to an end profile (14) in a load-bearing manner in the respective corner region,
- corner cap devices (30) which form the open corner region into a closed corner unit, whereby the corner cap device (30) includes a plurality of separate components:
- a base plate (32) which is connectable to the corner connector profile (20) or the side/end profile (12, 14) and covers the outside contour of the corner connector profile (20) and the free front end regions of the side profiles and end profiles (12, 14),
- a corner cap unit (34) which is connected releasably to the base plate (32) and a separate attachment unit (36) insertable from the top in corner cap unit (34) so that the open end region is upwardly concise closed by the floor covering (18),
- the corner cap unit (34) comprises a substantially triangular periphery, the hypotenuse (44) of which faces the corner connector profile (20) and is connected releasably to the same and the cathetuses (46) of which form walls which are arranged tapering toward one another at an angle of 90°,
- the hypotenuse (44) of the corner cap unit (34) extends substantially in the longitudinal direction of a chamfer (50) which is integrally formed in the corner region of the floor covering (18).

2. The floor structure for events as claimed in claim 1,
- **characterized in that**
- the releasable connection between the base plate (32) and the corner cap unit (34) is realized as a dovetail joint.

3. The floor structure for events as claimed in one or several of the preceding claims,
- **characterized in that**
- the attachment unit (36) is connected releasably to the top surface of the corner cap unit (34) and comprises a substantially level top side.

4. The floor structure for events as claimed in one or several of claims 1 to 3,
- **characterized in that**
- the attachment unit (36) comprises a triangular perimeter which is inserted releasably in the upwardly open triangular inner contour of the corner cap unit (34).

5. The floor structure for events as claimed in one or several of the preceding claims,
- **characterized in that**
- a chamfer (50) is realized in the corner region of the floor covering (18) and the floor covering (18) covers the top surface of the connected base plate (32) at least in regions.

6. The floor structure for events as claimed in one or several of the preceding claims,
- **characterized in that**
- the connection between corner connector profile (20) and base plate (32) is realized as a dovetail profile joint.

7. The floor structure for events as claimed in one or several of the preceding claims,
- **characterized in that**
- the outwardly visible outer wall of the side profile/end profile (12, 14), of the base plate (32) and of the corner cap unit (34) are arranged in one plane such that overall a closed corner region is realized.

8. The floor structure for events as claimed in one or several of the preceding claims,
- **characterized in that**
- the base plate (32) and/or the corner cap unit (34) and/or the attachment unit (36) are realized as plastic injection molded parts, in particular produced from polyamide (PA).

9. The floor structure for events as claimed in one or several of the preceding claims,
- **characterized in that**
- the outside contour cross section of the side profile (12) and of the end profile (14) are realized identically and comprise varied wall thicknesses.

## Revendications

1. Construction de sol pour événement (10), comportant
- deux profilés de montant opposés parallèlement (12),
- deux profilés de front opposés parallèlement formant avec les profilés de montant (12) en périphérie un rectangle présentant des zones de coin ouvertes, les profilés de montant (12) et/ou les profilés de front (14) pouvant être montés sur des profilés porteurs pour former par exemple une tribune ou un podium,
- un revêtement de sol (18), notamment un revêtement de sol en contreplaqué, raccordé aux profilés de front (14) et aux profilés de montant (12),
- des profilés de connecteur de coin (20), qui connectent de manière portante dans chaque zone de coin un profilé de montant (12) à un profilé de front (14),
- des dispositifs de capuchon de coin (30) raccordés dans chaque zone de coin, qui font de la zone de coin ouverte une unité de coin fermée,
- le dispositif de capuchon de coin (30) comprenant plusieurs composants séparés :
- une plaque de base (32), qui peut être raccordée au profilé de connecteur de coin (20) ou au profilé de montant/de front (12, 14) et qui recouvre le contour extérieur du profilé de connecteur de coin (20) et les zones d'extrémité frontale libres du profilé de montant et de front (12, 14),
- une unité de capuchon de coin (34) qui est connectée de manière amovible à la plaque de base (32), et une unité de coiffe (36) séparée, insérable par le haut dans l'unité de capuchon de coin (34), étant présente, avec laquelle la zone d'extrémité ouverte peut être terminée vers le haut en affleurement avec le revêtement de sol (18),
- l'unité de capuchon de coin (34) présentant un contour périphérique essentiellement de forme triangulaire, dont l'hypoténuse (44) est tourné vers le profilé de connecteur de coin (20) et est connecté de manière amovible avec celui-ci et dont les cathètes (46) forment des parois, qui sont agencées de manière convergente l'une vers l'autre à un angle de 90°,
- l'hypoténuse (44) de l'unité de capuchon de coin (34) s'étendant essentiellement dans la direction longitudinale d'un chanfrein (50) formé dans la zone de coin du revêtement de sol (18).

2. Construction de sol pour événement selon la revendication 1,
- **caractérisée en ce que**
- la connexion amovible entre la plaque de base (32) et l'unité de capuchon de coin (34) est configurée sous la forme d'une connexion en queue d'aronde.

3. Construction de sol pour événement selon une ou plusieurs des revendications précédentes,
- **caractérisée en ce que**
- l'unité de coiffe (36) est raccordée de manière amovible à l'unité de capuchon de coin (34) sur le côté supérieur et comprend un côté supérieur essentiellement plan.

4. Construction de sol pour événement selon une ou plusieurs des revendications 1 à 3,
- **caractérisée en ce que**
- l'unité de coiffe (36) comprend un contour périphérique de forme triangulaire, qui est inséré de manière amovible dans le contour intérieur de forme triangulaire ouvert vers le haut de l'unité de capuchon de coin (34).

5. Construction de sol pour événement selon une ou plusieurs des revendications précédentes,
- **caractérisée en ce que**
- un chanfrein (50) est formé dans la zone de coin du revêtement de sol (18) et le revêtement de sol (18) recouvre au moins en zones le côté supérieur de la plaque de base raccordée (32).

6. Construction de sol pour événement selon une ou plusieurs des revendications précédentes,
- **caractérisée en ce que**
- la connexion entre le profilé de connecteur de coin (20) et la plaque de base (32) est configurée sous la forme d'une connexion de profilé en queue d'aronde.

7. Construction de sol pour événement selon une ou plusieurs des revendications précédentes,
- **caractérisée en ce que**
- la paroi extérieure visible vers l'extérieur du profilé de montant/avant (12, 14), la plaque de base (32) et l'unité de capuchon de coin (34) sont agencées dans un plan, de telle sorte qu'une zone de coin fermée est formée au total.

8. Construction de sol pour événement selon une ou plusieurs des revendications précédentes,
- **caractérisée en ce que**
- la plaque de base (32) et/ou l'unité de capuchon de coin (34) et/ou l'unité de coiffe (36) sont configurées sous la forme d'une partie moulée par injection en matière plastique, notamment en polyamide (PA) .

9. Construction de sol pour événement selon une ou plusieurs des revendications précédentes,
- **caractérisée en ce que**
- la section transversale de contour extérieur du profilé de montant (12) et du profilé de front (14) est configurée de manière identique et présente des épaisseurs de paroi différentes.
